# EUROPÄISCHE PATENTSCHRIFT

(11) **EP 4 074 583 B1**
(45) Veröffentlichungstag und Bekanntmachung des Hinweises auf die Patenterteilung: **04.12.2024**
(21) Anmeldenummer: 21000106.1
(22) Anmeldetag: 16.04.2021
(51) Int. Cl.: B62D 61/12, B62D 49/08, A01B 3/46

(54) **HILFSRADVORRICHTUNG FÜR ZUGMASCHINEN UND ZUGMASCHINENSYSTEM**
AUXILIARY WHEEL DEVICE FOR TRACTORS AND TRACTOR SYSTEM
DISPOSITIF FORMANT ROUE AUXILIAIRE POUR ENGINS DE TRACTION ET SYSTÈME D'ENGIN DE TRACTION

(43) Veröffentlichungstag der Anmeldung: 19.10.2022
(73) Patentinhaber: MARMIX GmbH & Co. KG, 89597 Unterwachingen (DE)
(72) Erfinder: Aßfalg, Franz, 89597 Unterwachingen (DE); Aßfalg, Bastian, 89597 Unterwachingen (DE)
(74) Vertreter: Kienle, Thomas

(56) Entgegenhaltungen:
- EP-A1- 3 075 569
- DE-A1- 102010 048 287
- DE-A1- 2 362 151
- FR-A- 1 150 495

## Beschreibung

### TECHNISCHES GEBIET

Die vorliegende Erfindung betrifft eine Hilfsradvorrichtung für Zugmaschinen sowie ein Zugmaschinensystem.

### STAND DER TECHNIK

Zum Stand der Technik gehören Stütz- und Transporträder für Anbaudrehpflüge. Stützräder sind meist am Ende eines Pfluges an dessen Rahmen angeordnet und pendeln während bei einer Pflugwendung selbsttätig von einer Arbeitsstellung in eine andere. An einem Feldende oder während eines Transports verbleiben solche Stützräder am Rahmen und werden mit dem Pflug angehoben. Bei Anbaudrehpflügen dienen Stützräder dazu, den Tiefgang von Pflugkörpern während des Pflügens zu steuern. Transporträder sind vor allem bei mehrscharigen Anbaudrehpflügen bekannt, um während des Transports einen Teil des Gewichts des angehobenen mehrscharigen Anbaudrehpfluges zu stützen.

Aus der DE 7014464 ist ein Pendeltast- und Transportrad für mehrscharige Dreipunkt-Drehpflüge bekannt. Das Pendeltast- und Transportrad ist an einem Pflugrahmenheck angeordnet. Eine Pflugtiefe ist durch eine Einstellen des Pendeltast- und Transportrads relativ zum Pflugrahmen möglich. Das Pendeltast- und Transportrad wechselt selbsttätig in eine neue Arbeitslage, wenn der der Dreipunkt-Drehpflug von einer Schlepperhydraulik angehoben und gewendet wird. Für einen Straßentransport ist das Pendeltast- und Transportrad in einer Transportstellung feststellbar.

Aus der DE 2362151 ist eine Stützradbefestigung mit Stützrad bekannt, die mittels einer Befestigungsplatte lösbar an einem Rahmen eines Pfluges befestigt ist und den Pflug am Boden abstützt. Das Stützrad ist um eine am Rahmen angeordnete Achse schwenkbar gelagert. Ein Schwenkbereich des Stützrades ist durch pflugseitige Anschläge auf 180° begrenzt. Ferner weist die Stützradbefestigung eine Klemmvorrichtung auf, mittels der eine Höhenverstellung des Stützrades verbunden ist. Außerdem weist die Stützradbefestigung eine Stützradgabel auf, die um eine Drehachse frei drehbar ist. Diese freie Drehbarkeit ist für eine Transportstellung des Stützrades erwünscht, bei der die Schwenkbarkeit des Stützrades um die Achse mittels einer Arretiervorrichtung ausgeschaltet wird.

Weitere an Pflugrahmen befestigte Stützräder sind etwa aus der EP 3166379, der EP 2627162, der EP 2408289, der EP 1449417, der EP 0986943, der DE 29815053 und der DE 4031504 bekannt.

### AUFGABE

Somit besteht die Aufgabe der Erfindung darin eine verbesserte Hilfsradvorrichtung und insbesondere eine für Zugmaschinen und Zugmaschinensysteme mit schweren Anbaugeräten verbesserte Hilfsradvorrichtung bereitzustellen.

### OFFENBARUNG DER ERFINDUNG

Erfindungsgemäß wird eine Hilfsradvorrichtung für Zugmaschinen gemäß Anspruch 1 vorgeschlagen. Die erfindungsgemäße Hilfsradvorrichtung umfasst insbesondere wenigstens ein erstes Hilfsrad und eine Radaufhängung. Die Radaufhängung kann eine erste Drehachse aufweisen, um die das erste Hilfsrad drehbar gelagert ist. Die Radaufhängung kann eine zweite Drehachse aufweisen, um die das erste Hilfsrad lenkbar gelagert ist. Insbesondere umfasst die erfindungsgemäße Hilfsradvorrichtung eine Befestigungsvorrichtung zum abnehmbaren Befestigen an der Zugmaschine.

Eine Zugmaschine meint im Allgemeinen ein motorbetriebenes landgebundenes Zugfahrzeug, z.B. ein Traktor, zum Ziehen von Wagen, Anhängern, Tiefladern, Sattelaufliegern, landwirtschaftlichen Anbaugeräten, Ballastrierungen und anderen nicht angetriebenen Fahrzeugen. Eine Zugmaschine mit wenigstens einem angehängten Wagen, Anhänger, Tieflader, Sattelauflieger, landwirtschaftlichen Anbaugerät, Ballastrierungen oder anderem nicht angetriebenen Fahrzeugen wird im Folgenden als Gespann bezeichnet.

Traktoren zeichnen sich im Allgemeinen aus durch verschiedene Verbindungsstellen bzw. Befestigungsstellen, auch Anhängekupplungen genannt, zum Ziehen bzw. Antreiben von landwirtschaftlichen Anbaugeräten. Landwirtschaftliche Anbaugeräte umfassen z.B. Pflüge, Eggen, Grubber, Aussaatmaschinen, Schwader, Mähwerke etc. Zu den Befestigungsstellen gehören beispielsweise Anhängekupplung vorne und hinten mittels Bolzen, Zugpendel, Hitchhaken, Piton-Fix, Kugelkopfkupplung, Dreipunkthydraulik, Schnellkuppeldreieck, Sattelkupplung und/oder Kupplungsschiene bzw. Anhängebock.

Anbaugeräte und Ballastrierungen können die Fahreigenschaften eines Traktors beeinflussen. Durch den Anbau von Geräten an den Traktor dürfen im Allgemeinen bei Straßenfahrten zulässige Achslasten, ein höchstzulässiges Gesamtgewicht und eine Reifentragefähigkeit des Traktors nicht überschritten werden. Insbesondere soll eine Vorderachse des Traktors mit mindestens 20% eines Leergewichts des Traktors belastet sein, um etwa auch mit heckseitig angehängten Anbaugeräten eine ausreichende Lenkwirkung der Vorderachse zu gewährleisten. Eine Überschreitung kann im Feldeinsatz zulässig sein, wenn ein Traktorhersteller hierfür höhere technische Achslasten bzw. ein höheres technisches Gesamtgewicht angibt. Als schwere Anbaugeräte gelten insbesondere solche, die bei einem heckseitigen Anhängen an den Traktor im Feldeinsatz, also etwa bei einem Pflug in einer Arbeitsstellung, die Vorderachse derart entlasten, dass weniger als 20% des Leergewichts auf der Vorderachse lasten. Herkömmlicherweise wurden in solchen Fällen eine Ballastrierung an einer Traktor-Front angeordnet und/oder die schweren Anbaugeräte mit einem fest angeordneten, d.h. nicht abnehmbaren, stützenden Stützrad und/oder Transportrad ausgestattet. An einem Feldende muss jedoch ein solches schweres Anbaugerät eventuell angehoben werden, um den Traktor samt Anbaugerät zu wenden. Hierbei kann ein herkömmliches Stützrad jedoch seine Stützfunktion gerade dann nicht mehr erfüllen, wenn die Erhaltung der Lenkfähigkeit des Traktors besonders vonnöten ist. Die erfindungsgemäße Hilfsradvorrichtung ist vorzugweise direkt an der Zugmaschine, insbesondere an einem Heck der Zugmaschine befestigt, sodass sie gerade nicht zusammen dem schweren Anbaugerät, etwa an einem Feldende, angehoben werden muss. Vielmehr kann die erfindungsgemäße Hilfsradvorrichtung die Vorderachse so abstützen, d.h. mit mindestens 20% des Traktorleergewichts belasten, dass die Lenkfähigkeit des Traktors erhalten bleibt.

Herkömmliche Transporträder von schweren Anbaugeräten verfügen normalerweise über keine Lenkachse, sondern sind ungelenkt, sodass das schwere Anbaugerät zum Transport von und zum Feld an einer gelenkigen Anhängekupplung gezogen werden muss, während das schwere Anbaugerät in Arbeitsstellung typischerweise an der Dreipunkthydraulik angehängt wird. Das heißt herkömmliche schwere Anbaugeräte verursachen Aufwand beim Transport. Die zweite Drehachse der erfindungsgemäßen Hilfsradvorrichtung ermöglicht es, das schwere Anbaugerät insbesondere ohne ein Umkuppeln auf eine gelenkige Anhängekupplung, sondern lediglich durch ein An- bzw. Ausheben des schweren Anbaugeräts zu transportieren, wobei die erfindungsgemäße Hilfsradvorrichtung bei Kurvenfahren der Zugmaschine passiv mitlenken, gleichzeitig die Hinterachse des Zugfahrzeugs entlasten und die Vorderachse des Zugfahrzeugs belasten kann.

Herkömmliche Pendel-Stützräder von Anbaudrehpflügen schlagen bei einer Pflugwendung meist schlagartig von einer Arbeitsstellung in die andere Arbeitsstellung um. Dabei treten plötzlich hohe Drehmomente und Kräfte an der Anhängekupplung und/oder Schlepperhydraulik auf, die dieselben verschleißen oder beschädigen können. Die erfindungsgemäße Hilfsradvorrichtung ist im Wesentlichen direkt an der Zugmaschine befestigt, sodass es bei der Plugwendung insbesondere nicht zu einem schlagartigen Umschlagen kommt.

Gemäß einer weiteren Ausführungsform kann die Befestigungsvorrichtung eine Anhängevorrichtung umfassen. Weiter kann es bevorzugt sein, dass die Befestigungsvorrichtung eine Schlittenplatte zur Befestigung an einem Anhängebock der Zugmaschine umfasst. Die Ausführung der Befestigungsvorrichtung als Anhängevorrichtung hat im Wesentlichen den Vorteil der universellen Kompatibilität mit Zugmaschinen verschiedener Hersteller. Die Ausführung als Schlittenplatte zur Befestigung an einem Anhängebock bzw. einer Schlittenführung der Zugmaschine ermöglicht im Wesentlichen die gleichzeitige Nutzung anderer Anhängevorrichtung der Zugmaschine. So können beispielsweise die erfindungsgemäße Hilfsradvorrichtung am Anhängebock und gleichzeitig ein Anbaudrehpflug an der Dreipunkthydraulik der Zugmaschine angehängt sein. Die Schlittenplatte kann höhenverstellbar an der Schlittenführung montiert werden, etwa um die erfindungsgemäße Hilfsradvorrichtung individuell auf eine Zugmaschine einzustellen. Die Schlittenplatte greift insbesondere formschlüssig in die Schlittenführung ein. Die Schlittenplatte und die Schlittenführung können mittels ein oder mehrerer Bolzen bzw. Schraubbolzen lösbar miteinander verbunden werden.

Gemäß einer weiteren Ausgestaltung kann die Radaufhängung einen Lenkstock umfassen, der das erste Hilfsrad um die zweite Drehachse lenkbar lagert. Ferner kann die Radaufhängung eine Lenkachse umfassen, an deren distalem Ende das Hilfsrad um die erste Drehachse drehbar angeordnet sein kann. Die Lenkachse greift an ihrem proximalen Ende drehbar um die zweite Drehachse am Lenkstock ein. Um Lenkbewegungen des Hilfsrades zu dämpfen kann die Radaufhängung ferner ein Reibelement umfassen, das reibend an der Lenkachse eingreift. Eine Schraubenzugfeder ist insbesondere exzentrisch am proximalen Ende sowie an der Radaufhängung angreifend angeordnet, um das Reibelement gegen die Lenkachse vorzuspannen.

Es ist ferner bevorzugt, dass die Radaufhängung im Wesentlichen wenigstens eine erste Schwinge, auch Längslenker genannt, umfasst, die das erste Hilfsrad beweglich aufhängt. Die Schwinge kann an ihrem einen Ende an der Befestigungsvorrichtung angelenkt sein. An ihrem anderen Ende kann die Schwinge am Lenkstock angeordnet sein. Außerdem kann die Radaufhängung wenigstens eine zweite und/oder dritter und/oder vierte Schwinge umfassen, die das erste Hilfsrad beweglich aufhängen. Die Schwingen können voneinander beabstandet an ihren einen Enden an der Befestigungsvorrichtung angelenkt sein und an ihren anderen Enden miteinander verbunden und/oder über eine oder mehrere Streben gelenkig verbunden sein. Die Befestigungsvorrichtung, die Schwingen und/oder die ein oder mehreren Streben können vorzugsweise eine geschlossene kinematische Kette bilden. Mehrere Schwingen verbessern insbesondere ein Weiterleiten von Kräften, etwa Querkräften, und Drehmomenten vom erste Hilfsrad in die Befestigungsvorrichtung bzw. in die Zugmaschine.

Die Radaufhängung umfasst ferner einen Aktor zum Bewegen des ersten Hilfsrades bezüglich eines Untergrundes. Der Aktor umfasst insbesondere einen Linearmotor, einen Hydraulikzylinder oder dergleichen. Der Hydraulikzylinder kann an seinem einen Ende an der Befestigungsvorrichtung oder am einen Ende der wenigstens einen Schwinge angelenkt und an seinem anderen Ende an einem anderen Ende der zweiten Schwinge, an einer Strebe oder am Lenkstock angelenkt sein. Der Hydraulikzylinder kann ein Anheben oder Absenken des ersten Hilfsrades bezüglich der Zugmaschine bzw. bezüglich des Untergrunds bewirken. Der Hydraulikzylinder ist insbesondere vom Führerhaus der Zugmaschine aus steuerbar. Mittels eines Druckbegrenzungsventils und/oder eines Druckspeichers für Hydraulikflüssigkeit kann der Anpressdruck des ersten Hilfsrades auf den Untergrund eingestellt werden.

Vorzugsweise sind die erste und zweite Drehachse derart zueinander angeordnet, dass sie einen Nachlauf des ersten Hilfsrades hervorrufen. Als Nachlauf bzw. Nachlaufstrecke wird im Allgemeinen die Komponente eines Vektors von einem Radaufstandspunkt zu einem Durchstoßpunkt der Lenkachse bzw. zweiten Drehachse durch die Fahrbahnfläche in Richtung einer Schnittlinie Radmittelebene zu Fahrbahn bezeichnet. Der Radaufstandspunkt liegt vorzugsweise in Fahrtrichtung gesehen hinter dem Durchstoßpunkt, auch als positiver Nachlauf bezeichnet, sodass das erste Hilfsrad der zweiten Drehachse nachläuft. Durch den Nachlauf kann bei einer Kurvenfahrt ein Drehmoment entstehen, das diesem als Rückstellmoment entgegengerichtet ist. Dadurch lenkt die Hilfsradvorrichtung selbständig zurück bis etwa zu einer Geradeausstellung. Nachlauf bewirkt im Allgemeinen einen verbesserten Geradeauslauf des ersten Hilfsrades.

Gemäß einer weiteren Ausführung kann die Hilfsradvorrichtung ein zweites Hilfsrad aufweisen, das insbesondere in einem spitzen Winkel zum ersten Hilfsrad angeordnet ist, um eine Vorspur zu bewirken.

Ferner wird ein Zugmaschinensystem gemäß Anspruch 8 zur Verfügung gestellt, das insbesondere eine Zugmaschine und die erfindungsgemäße Hilfsradvorrichtung umfasst. Vorteilhafte Weiterbildungen der Erfindung sind in den Unteransprüchen angegeben und in der Beschreibung beschrieben.

### KURZBESCHREIBUNG DER ZEICHNUNGEN

Ausführungsbeispiele der Erfindung werden anhand der Zeichnungen und der nachfolgenden Beschreibung näher erläutert. Es zeigen:
- Figur 1A: ein Ausführungsbeispiel einer perspektivische Ansicht einer Hilfsradvorrichtung gemäß der Erfindung,
- Figur 1B: eine Schnittansicht des Ausführungsbeispiels der Hilfsradvorrichtung von Fig. 1A,
- Figur 2: ein Ausführungsbeispiel eines Anhängebocks gemäß der Erfindung und
- Figur 3: ein Ausführungsbeispiel eines Zugmaschinensystems gemäß der Erfindung.

### AUSFÜHRUNGSFORMEN DER ERFINDUNG

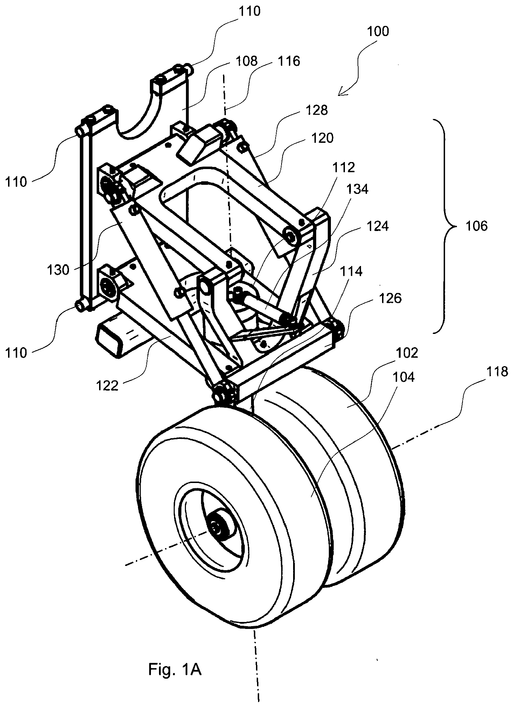

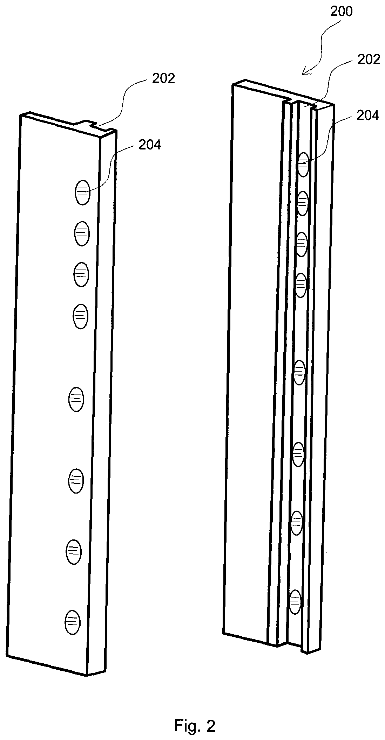

In der Figur 1A ist eine Hilfsradvorrichtung 100 gezeigt. Die Hilfsradvorrichtung 100 umfasst ein erstes 102, ein zweites Hilfsrad 104, eine Radaufhängung 106 und eine Schlittenplatte 108. Die Schlittenplatte 108 dient zur abnehmbaren Befestigung der Hilfsradvorrichtun g100 an einem Anhängebock mit Schlittenführungen (siehe Fig. 2), wobei der Anhängebock am Heck eines Traktors angeordnet ist. Zur Befestigung umfasst die Schlittenplatte 108 vier Bolzen 110, die in entsprechende Bohrungen der Schlittenführungen eingreifen.

Die Radaufhängung 106 umfasst ferner einen Lenkstock 112 und eine Lenkachse 114. Die Lenkachse 114 greift an ihrem einen Ende drehbar um eine Drehachse 116 im Lenkstock 112 ein. An einem anderen Ende der Lenkachse 114 sind beidseits die Hilfsräder 102, 104 drehbar um eine Drehachse 118 angeordnet.

Die Radaufhängung 106 umfasst außerdem eine erste 120 und eine zweite U-förmige Schwinge 122. Die erste U-förmige Schwinge 120 ist an ihrem einen Ende an der Schlittenplatte 108 angelenkt. Auch die zweite U-förmige Schwinge 122 ist an ihrem einen Ende an der Schlittenplatte 108 angelenkt. Die Anlenkungen der U-förmigen Schwingen 120, 122 an der Schlittenplatte 108 sind voneinander beabstandet. Ferner umfasst die Radaufhängung 106 eine V-förmige Strebe 124. Die erste U-förmige Schwinge 120 ist an ihrem anderen Ende an einem Ender der V-förmigen Strebe 124 angelenkt. Die zweite U-förmige Schwinge 122 ist an ihrem anderen Ende am anderen Ende der V-förmigen Strebe 124 angelenkt. Die Schlittenplatte 108, die zwei U-förmigen Schwingen 120, 122 und die V-förmige Strebe 124 bilden eine geschlossene kinematische Kette und gleichen einem Parallelogramm mit Gelenken an den Ecken.

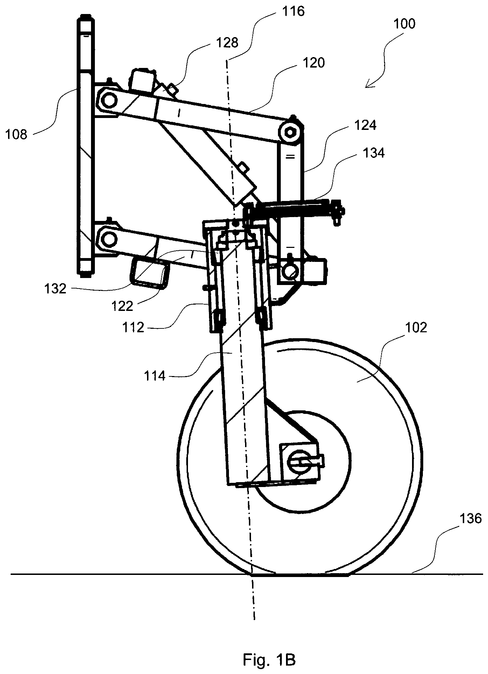

Eine jochartige Strebe 126 ist am anderen Ende der zweiten U-förmigen Schwinge 122 angeordnet und verstärkt eine offene Seite des U der U-förmigen Schwinge 122. Zwei doppelt wirkende Hydraulikzylinder 128, 130 sind zu beiden Seiten Radaufhängung 106 angeordnet. Erste Enden der Hydraulikzylinder 128, 130 sind jeweils zu beiden Seiten des ersten Endes der ersten U-förmigen Schwinge 120 angelenkt. Andere Enden der Hydraulikzylinder 128, 130 sind jeweils an den Enden der jochartigen Strebe 126 angelenkt. Die Hydraulikzylinder 128, 130 sind ähnlich einer Parallelogramm-Diagonalen angeordnet. Fahren die doppelt wirkenden Hydraulikzylinder 128, 130 ein, so verschieben sie das Parallelogramm bzw. die Radaufhängung derart, dass die Hilfsräder 102, 104 von einem Untergrund 136 (siehe Fig. 1B) angehoben werden. Fahren die doppelt wirkenden Hydraulikzylinder 128, 130 aus, so verschieben sie das Parallelogramm bzw. die Radaufhängung derart, dass die Hilfsräder 102, 104 auf den Untergrund 136 (siehe Fig. 1B) abgesenkt werden.

Anbaugeräte und Ballastrierungen können die Fahreigenschaften des Traktors beeinflussen. Durch den Anbau von Geräten an den Traktor dürfen im Allgemeinen bei Straßenfahrten zulässige Achslasten, ein höchstzulässiges Gesamtgewicht und eine Reifentragefähigkeit des Traktors nicht überschritten werden. Eine Vorderachse des Traktors soll mit mindestens 20% eines Leergewichts des Traktors belastet sein, um etwa auch mit heckseitig angehängten Anbaugeräten eine ausreichende Lenkwirkung der Vorderachse zu gewährleisten. Eine Überschreitung kann im Feldeinsatz zulässig sein, wenn ein Traktorhersteller hierfür höhere technische Achslasten bzw. ein höheres technisches Gesamtgewicht angibt. Als schwere Anbaugeräte gelten insbesondere solche, die bei einem heckseitigen Anhängen an den Traktor im Feldeinsatz, also etwa bei einem Pflug in einer Arbeitsstellung, die Vorderachse derart entlasten, dass weniger als 20% des Leergewichts auf der Vorderachse lasten. Herkömmlicherweise wurden in solchen Fällen eine Ballastrierung an einer Traktor-Front angeordnet und/oder die schweren Anbaugeräte mit einem fest angeordneten, d.h. nicht abnehmbaren, stützenden Stützrad und/oder Transportrad ausgestattet. An einem Feldende muss jedoch ein solches schweres Anbaugerät eventuell angehoben werden, um den Traktor samt Anbaugerät zu wenden. Hierbei kann ein herkömmliches Stützrad jedoch seine Stützfunktion gerade dann nicht mehr erfüllen, wenn die Erhaltung der Lenkfähigkeit des Traktors besonders vonnöten ist. Die Hilfsradvorrichtung 100 ist direkt mit dem Traktor verbindbar, insbesondere an einem Heck Traktors befestigt, sodass sie gerade nicht zusammen dem schweren Anbaugerät, etwa an einem Feldende, angehoben werden muss. Vielmehr kann die Hilfsradvorrichtung 100 die Vorderachse stets so abstützen, d.h. mit mindestens 20% des Traktorleergewichts belasten, dass die Lenkfähigkeit des Traktors erhalten bleibt.

Herkömmliche Transporträder von schweren Anbaugeräten für Traktoren verfügen normalerweise über keine Lenkachse, sondern sind ungelenkt, sodass das schwere Anbaugerät zum Transport von und zum Feld an einer gelenkigen Anhängekupplung gezogen werden muss während das schwere Anbaugerät in Arbeitsstellung typischerweise an der Dreipunkthydraulik angehängt wird. Das heißt herkömmliche schwere Anbaugeräte verursachen Aufwand beim Transport. Die Drehachse 116 der Hilfsradvorrichtung 100 ermöglicht es das schwere Anbaugerät insbesondere ohne ein Umkuppeln auf eine gelenkige Anhängekupplung, sondern lediglich durch ein An- bzw. Ausheben des schweren Anbaugeräts zu transportieren, wobei die Hilfsradvorrichtung 100 bei Kurvenfahren des Traktors passiv mitlenkt, gleichzeitig die Hinterachse des Traktors entlastet und die Vorderachse des Zugfahrzeugs belastet.

Herkömmliche Pendel-Stützräder von Anbaudrehpflügen schlagen bei einer Pflugwendung meist schlagartig von einer Arbeitsstellung in die andere Arbeitsstellung um. Dabei treten plötzlich hohe Drehmomente und Kräfte an der Anhängekupplung und/oder Traktorhydraulik auf, die dieselben verschleißen oder beschädigen können. Die Hilfsradvorrichtung 100 ist direkt am Traktor befestigbar, sodass es bei der Plugwendung nicht zu einem schlagartigen Umschlagen kommt.

Gemäß eines weiteren Ausführungsbeispiels sind die Drehachse 116 und die Drehachse 118 derart zueinander angeordnet, dass sie einen Nachlauf der Hilfsräder 102, 104 hervorrufen. Als Nachlauf bzw. Nachlaufstrecke wird die Komponente eines Vektors von einem Radaufstandspunkt zu einem Durchstoßpunkt der Drehachse 116 durch den Untergrund 136 (siehe Fig. 1B) in Richtung einer Schnittlinie Radmittelebene zu Untergrund 136 (siehe Fig. 1B) bezeichnet. Der Radaufstandspunkt liegt vorzugsweise in Fahrtrichtung gesehen hinter dem Durchstoßpunkt, auch als positiver Nachlauf bezeichnet, sodass die Hilfsräder 102, 104 der Drehachse 116 nachlaufen. Durch den Nachlauf kann bei einer Kurvenfahrt ein Drehmoment entstehen, das diesem als Rückstellmoment entgegengerichtet ist. Dadurch lenkt die Hilfsradvorrichtung 100 selbständig zurück bis etwa zu einer Geradeausstellung. Nachlauf bewirkt im Allgemeinen eine verbesserten Geradeauslauf der Hilfsräder 102, 104.

Gemäß eines weiteren Ausführungsbeispiels ist das Hilfsrad 102 in einem spitzen Winkel zum Hilfsrad 104 angeordnet, um eine Vorspur zu bewirken. Der spitze Winkel liegt z.B. in einem Bereich von 1 - 20°, wobei das zweite Hilfsrad 104 eine weitere Drehachse aufweist, die in einem entsprechend stumpfen Winkel zur Drehachse 118 angeordnet ist.

in der Figur 1B ist eine Schnittansicht der Hilfsradvorrichtung 100 gezeigt, wobei der Schnitt durch die Drehachse 116 und die Schlittenplatte 106 verläuft und die Hilfsradvorrichtung 100 halbiert. Um eine Lenkbewegung der Hilfsräder 102, 104 zu dämpfen umfasst die Radaufhängung 106 ein Reibelement 132, das reibend an der Lenkachse 114 eingreift. Eine Schraubenzugfeder 134 ist exzentrisch am einen Ende der Lenkachse 114 sowie an der Radaufhängung 106 eingreifend angeordnet, um das Reibelement 132 gegen die Lenkachse 114 vorzuspannen.

In der Figur 2 ist ein Anhängebock 200 gezeigt. Der Anhängebock hat zwei zueinander parallele Schlittenführungen 202, die jeweils mehreren Bohrungen 204 aufweisen. In den Schlittenführungen 202 ist eine Schlittenplatte höhenverstellbar montierbar, um eine Hilfsradvorrrichtung individuell auf eine Zugmaschine einzustellen. Die Schlittenplatte greift formschlüssig in die Schlittenführungen 202 ein. Die Schlittenplatte und die Schlittenführungen 202 können mittels ein oder mehrerer Bolzen bzw. Schraubbolzen lösbar miteinander verbunden werden. Der Anhängebock 200 ist am Heck mit der Zugmaschine verschweißt oder verschraubt.

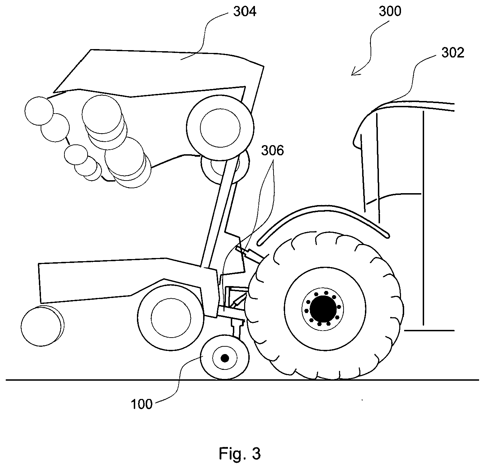

In der Figur 3 ist ein Zugfahrzeugsystem 300 gezeigt. Das Zugfahrzeugsystem 300 umfasst eine Zugmaschine 302, die Hilfsradvorrichtung 100 und ein schweres Anbaugerät 304, das an einer Dreipunkthydraulik 306 der Zugmaschine 302 angehängt ist. Das schwere Anbaugerät 304 ist in einem angehobenen Zustand bzw. Transportzustand gezeigt. Das Anbaugerät 304 ist so schwer, dass es eine Vorderachse der Zugmaschine 300 derart entlasten würde, dass die Zugmaschine 302 keine ausreichende Lenkfähigkeit mehr hätte. Die Hilfsradvorrichtung 100 ist auf einen Untergrund 308 abgesenkt und stützt die Vorderachse derart ab, dass die Lenkfähigkeit der Zugmaschine 302 wiederhergestellt ist.

### BEZUGZEICHENLISTE

- 100: Hilfsradvorrichtung
- 102: Erstes Hilfsrad
- 104: Zweites Hilfsrad
- 106: Radaufhängung
- 108: Schlittenplatte
- 110: Bolzen
- 112: Lenkstock
- 114: Lenkachse
- 116: Drehachse
- 118: Drehachse
- 120: Erste U-förmige Schwinge
- 122: Zweite U-förmige Schwinge
- 124: V-förmige Strebe
- 126: jochartige Strebe
- 128: Doppelt wirkender Hydraulikzylinder
- 130: Doppelt wirkender Hydraulikzylinder
- 132: Reibelement
- 134: Schraubenzugfeder
- 136: Untergrund
- 200: Anhängebock
- 202: Schlittenführung
- 204: Bohrungen
- 300: Zugmaschinensystem
- 302: Zugmaschine
- 304: Schweres Anbaugerät
- 306: Dreipunkthydraulik

## Patentansprüche

1. Hilfsradvorrichtung (100) eingerichtet für Zugmaschinen (302) mit:
wenigstens einem ersten Hilfsrad (102, 104) und
einer Radaufhängung (106),
wobei die Radaufhängung (106) eine erste Drehachse (118) aufweist, um die das erste Hilfsrad (102, 104) drehbar gelagert ist, und
wobei die Radaufhängung (106) eine zweite Drehachse (116) aufweist, um die das erste Hilfsrad (102, 104) lenkbar gelagert ist; und
einer Befestigungsvorrichtung (108) eingerichtet zum abnehmbaren Befestigen an der Zugmaschine (302),
**dadurch gekennzeichnet, dass**
die Radaufhängung (106) einen Aktor (128, 130) eingerichtet zum Bewegen des ersten Hilfsrades (102, 104) bezüglich eines Untergrundes im montierten Zustand der Hilfsradvorrichtung (100) umfasst.

2. Hilfsradvorrichtung (100) nach Anspruch 1
**dadurch gekennzeichnet, dass**
die Befestigungsvorrichtung (108) eine Anhängevorrichtung (108) umfasst.

3. Hilfsradvorrichtung (100) Anspruch 1 oder 2
**dadurch gekennzeichnet, dass**
die Befestigungsvorrichtung (108) eine Schlittenplatte (108) zur Befestigung an einem Anhängebock (200) der Zugmaschine (302) umfasst.

4. Hilfsradvorrichtung (100) nach einem der vorhergehenden Ansprüche
**dadurch gekennzeichnet, dass**
die Radaufhängung (106) einen Lenkstock (112) umfasst, der das erste Hilfsrad (102, 104) um die zweite Drehachse (116) lenkbar lagert.

5. Hilfsradvorrichtung (100) nach einem der vorhergehenden Ansprüche
**dadurch gekennzeichnet, dass**
die Radaufhängung (106) wenigstens eine erste Schwinge (120, 122) umfasst, die das erste Hilfsrad (102, 104) beweglich aufhängt.

6. Hilfsradvorrichtung (100) nach einem der vorhergehenden Ansprüche
**dadurch gekennzeichnet, dass**
die erste (118) und zweite Drehachse (116) derart zueinander angeordnet sind, dass sie einen Nachlauf des ersten Hilfsrades (102, 104) hervorrufen.

7. Hilfsradvorrichtung (100) nach einem der vorhergehenden Ansprüche
**dadurch gekennzeichnet, dass**
die Hilfsradvorrichtung (104) ein zweites Hilfsrad (104) aufweist, das in einem spitzen Winkel zum ersten Hilfsrad (102) angeordnet ist, um eine Vorspur zu bewirken.

8. Zugmaschinensystem (300) mit
einer Zugmaschine (302) und
einer Hilfsradvorrichtung (100) nach einem der vorhergehenden Ansprüche.

## Claims

1. An auxiliary wheel apparatus (100) configured for tractors (302) with:
at least one first auxiliary wheel (102, 104) and
a wheel suspension (106),
wherein the wheel suspension (106) has a first rotating axis (118) about which the first auxiliary wheel (102, 104) is mounted for rotation, and
wherein the wheel suspension (106) has a second rotating axis (116) about which the first auxiliary wheel (102, 104) is mounted in a steerable manner; and
a fastening apparatus (108) arranged for removable fastening to the tractor (302),
**characterized in that**
the wheel suspension (106) comprises an actuator (128, 130) configured to move the first auxiliary wheel (102, 104) with respect to a ground in the mounted state of the auxiliary wheel apparatus (100).

2. The auxiliary wheel (100) apparatus according to claim 1,
**characterized in that**
the fastening apparatus (108) comprises a hitch apparatus (108).

3. The auxiliary wheel apparatus (100) according to claim 1 or 2,
**characterized in that**
the fastening apparatus (108) comprises a carriage plate (108) for fastening to a hitch bracket (200) of the tractor (302).

4. The auxiliary wheel apparatus (100) according to one of the preceding claims,
**characterized in that**
the wheel suspension (106) comprises a steering column (112), which supports the first auxiliary wheel (102, 104) in a steerable manner about the second rotating axis (116).

5. The auxiliary wheel apparatus (100) according to one of the preceding claims,
**characterized in that**
the wheel suspension (106) comprises at least one first swing arm (120, 122), which movably suspends the first auxiliary wheel (102, 104).

6. The auxiliary wheel apparatus (100) according to one of the preceding claims,
**characterized in that**
the first (118) and second rotating axes (116) are arranged relative to one another in such a way that they cause a trailing effect of the first auxiliary wheel (102, 104).

7. The auxiliary wheel apparatus (100) according to one of the preceding claims,
**characterized in that**
the auxiliary wheel apparatus (104) has a second auxiliary wheel (104), which is arranged at an acute angle to the first auxiliary wheel (102) in order to create a toe-in effect.

8. A tractor system (300) with
a tractor (302) and
an auxiliary wheel apparatus (100) according to one of the preceding claims.

## Revendications

1. Dispositif à roues auxiliaires (100) conçu pour des tracteurs (302) comportant :
au moins une première roue auxiliaire (102, 104) et
une suspension de roue (106),
dans lequel la suspension de roue (106) présente un premier axe de rotation (118) autour duquel la première roue auxiliaire (102, 104) est montée de manière à pouvoir tourner, et
dans lequel la suspension de roue (106) présente un second axe de rotation (116) autour duquel la première roue auxiliaire (102, 104) est montée de manière à pouvoir être dirigée ; et
un dispositif de fixation (108) conçu pour la fixation de manière amovible sur le tracteur (302),
**caractérisé en ce que**
la suspension de roue (106) comprend un actionneur (128, 130) conçu pour déplacer la première roue auxiliaire (102, 104) par rapport à un sol à l'état monté du dispositif à roues auxiliaires (100).

2. Dispositif à roues auxiliaires (100) selon la revendication 1
**caractérisé en ce que**
le dispositif de fixation (108) comprend un dispositif d'attelage (108).

3. Dispositif à roues auxiliaires (100) selon la revendication 1 ou 2
**caractérisé en ce que**
le dispositif de fixation (108) comprend une plaque glissière (108) pour la fixation à un chevalet d'attelage (200) du tracteur (302).

4. Dispositif à roues auxiliaires (100) selon l'une des revendications précédentes
**caractérisé en ce que**
la suspension de roue (106) comprend une colonne de direction (112) qui supporte la première roue auxiliaire (102, 104) de manière à pouvoir la diriger autour du second axe de rotation (116).

5. Dispositif à roues auxiliaires (100) selon l'une des revendications précédentes
**caractérisé en ce que**
la suspension de roue (106) comprend au moins une première bielle (120, 122) qui suspend de manière mobile la première roue auxiliaire (102, 104).

6. Dispositif à roues auxiliaires (100) selon l'une des revendications précédentes
**caractérisé en ce que**
le premier (118) et le second (116) axe de rotation sont disposés l'un par rapport à l'autre de telle sorte qu'ils provoquent une chasse de la première roue auxiliaire (102, 104).

7. Dispositif à roues auxiliaires (100) selon l'une des revendications précédentes
**caractérisé en ce que**
le dispositif à roues auxiliaires (104) présente une seconde roue auxiliaire (104) qui est disposée à un angle aigu par rapport à la première roue auxiliaire (102) pour effectuer un pincement.

8. Système de tracteur (300) comportant
un tracteur (302) et
un dispositif à roues auxiliaires (100) selon l'une des revendications précédentes.
